# DEMANDE DE BREVET EUROPEEN

(11) **EP 1 674 713 A1**
(43) Date de publication de la demande: **28.06.2006**
(21) Numéro de dépôt: 05301040.1
(22) Date de dépôt: 12.12.2005
(51) Int. Cl.: F02M 35/16, B62D 21/17

(54) **Dispositif d'admission d'air pour un filtre à air de véhicule automobile**

(30) Priorité: 21.12.2004 FR 0453103
(71) Demandeur: Renault s.a.s., 92100 Boulogne Billancourt (FR)
(72) Inventeur: Petit, Jérôme, 94340 Joinville le Pont (FR); Grizaud, Eric, 78260 Acheres (FR)

(57) **Abrégé**

Dispositif d'admission d'air (1) pour un filtre à air (2) de véhicule automobile, comprenant au moins un conduit amont d'admission (10) situé entre un filtre à air (2) et une écope (6) par laquelle l'air arrive, ce conduit (10) s'étendant dans la direction d'un longeron (4) de la structure du véhicule, caractérisé en ce qu'un conduit étanche est formé à l'intérieur du longeron (4), une première extrémité (12) de ce conduit étanche communiquant avec le filtre à air (2) et l'autre extrémité (16) de ce conduit étanche communiquant avec l'écope (6), de sorte que le conduit amont d'admission d'air (10) est intégré à l'intérieur du longeron (4).

## Description

La présente invention concerne un dispositif d'admission d'air pour un filtre à air de véhicule automobile, et plus particulièrement un dispositif de ce type comprenant au moins un conduit amont d'admission situé entre un filtre à air et une écope par laquelle l'air arrive, ce conduit s'étendant dans la direction d'un longeron de la structure du véhicule.

Classiquement, un filtre à air est monté sur un longeron de la structure avant du véhicule. Un conduit d'admission d'air débouche de ce filtre à air et s'étend au dessus du longeron vers l'avant du véhicule. Un résonateur et une écope sont montés à l'extrémité libre de ce conduit. Le résonateur est placé dans la tubulure d'admission pour réduire les bruits aérodynamiques créés par le passage de l'air. L'écope correspond à l'arrivée d'air depuis l'extérieur du véhicule vers le conduit d'admission et par la suite vers le filtre à air. Ce type d'agencement présente un inconvénient majeur d'encombrement dans une zone très fonctionnelle du véhicule. De plus, les performances peuvent être pénalisées par les pertes de charge sur le parcours de l'air dans les différents conduits. Ces conduits doivent également être montés les uns par rapport les autres, ce qui, outre les problématiques de montage induits, posent des problèmes de tenue aux sollicitations vibratoires des fixations des conduits entre eux.

Le document EP 0 451 916 divulgue un conduit d'admission d'air formé dans une structure tubulaire qui est montée transversalement au véhicule, et fixée sur un élément structurel transversal positionné à l'avant du véhicule. Cette structure tubulaire est une pièce rajoutée à la structure avant et vient se positionner entre l'élément structurel transversal et le bouclier. Un inconvénient majeur de ce type d'agencement est l'encombrement de la structure avant du véhicule.

Un des objectifs de l'invention est donc de proposer un dispositif d'admission d'air qui permet d'optimiser la place disponible dans le compartiment moteur, et qui permet d'améliorer la circulation de l'air vers le filtre à air. En réponse à des contraintes que l'on retrouve invariablement chez les différents constructeurs automobiles, la présente invention se veut également peu coûteuse.

Pour répondre à ces différents objectifs, l'invention propose un dispositif tel que décrit précédemment, caractérisé en ce qu'un conduit étanche est formé à l'intérieur du longeron, une première extrémité de ce conduit étanche communiquant avec le filtre à air et l'autre extrémité de ce conduit étanche communiquant avec l'écope, de sorte que le conduit amont d'admission d'air est intégré à l'intérieur du longeron.

Selon différentes caractéristiques de la présente invention :
- chaque extrémité du conduit est munie de moyens d'accouplement intégrés dans le longeron.
- le filtre à air est emmanché dans le longeron.
- l'écope est connectée au conduit d'admission sur une des parois latérales du longeron.
- l'écope est connectée au conduit d'admission sur la paroi supérieure de ce longeron.
- l'écope est emmanchée dans le longeron.
- un résonateur est emmanché dans le longeron et débouche sur le conduit étanche d'admission d'air.
- le résonateur est emmanché sur une des parois latérales du longeron.

L'invention vise à protéger également une structure de véhicule automobile comprenant un dispositif d'admission d'air selon l'invention, dans lequel les organes fonctionnels du véhicule sont liés au longeron dans des parties distinctes du conduit étanche.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un conduit d'admission d'un filtre à air selon un premier mode de réalisation de l'invention.
- la figure 2 est une représentation schématique éclatée du conduit représenté à la figure 1.

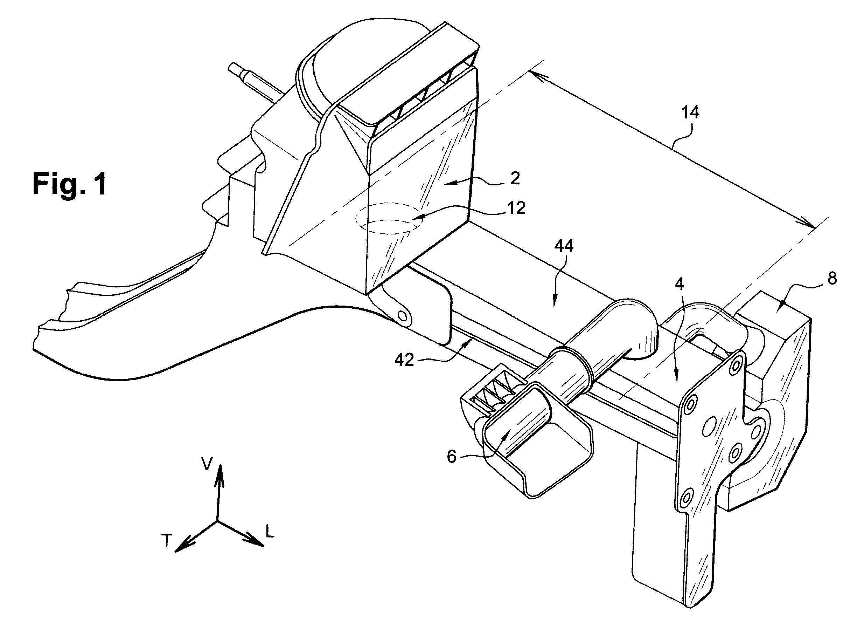

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Tel que représenté à la figure 1, un longeron 4 formant la structure avant du véhicule fait office de conduit amont d'admission 10 pour le filtre à air 2. L'air est capté via l'écope 6 orientée sur l'avant du véhicule et est acheminé jusqu'à une entrée 16 à l'avant du longeron 4. Le longeron 4 étanche canalise l'air et permet son acheminement sans perte jusqu'à une sortie 12 située sur l'arrière du longeron 4 et sur laquelle le filtre à air 2 est emmanché. Il convient alors qu'une zone 14 du longeron 4 soit strictement étanche, cette zone 14 devant s'étendre au moins entre l'entrée d'air 16 située à l'avant du longeron 4 et la sortie d'air 12 positionnée à l'arrière de ce longeron 4.

En parallèle de ce circuit, un résonateur 8 peut être raccordé au longeron 4 pour réduire les bruits aérodynamiques crées par le passage de l'air dans le longeron 4. Ce raccordement est opéré à titre d'exemple, par l'emmanchement d'une extrémité 9 du résonateur 8 dans la zone étanche 14 du longeron 4. Il est à noter que pour des raisons d'encombrement, le résonateur 8 peut être raccordé au conduit d'admission 10, en dehors de la zone s'étendant entre le filtre à air 2 et l'écope 6. Dans ce cas, la zone étanche 14 du longeron 4 formant le conduit d'admission 10 s'étend de l'orifice d'accueil 18 du résonateur 8 jusqu'à la sortie d'air propre au filtre à air 2.

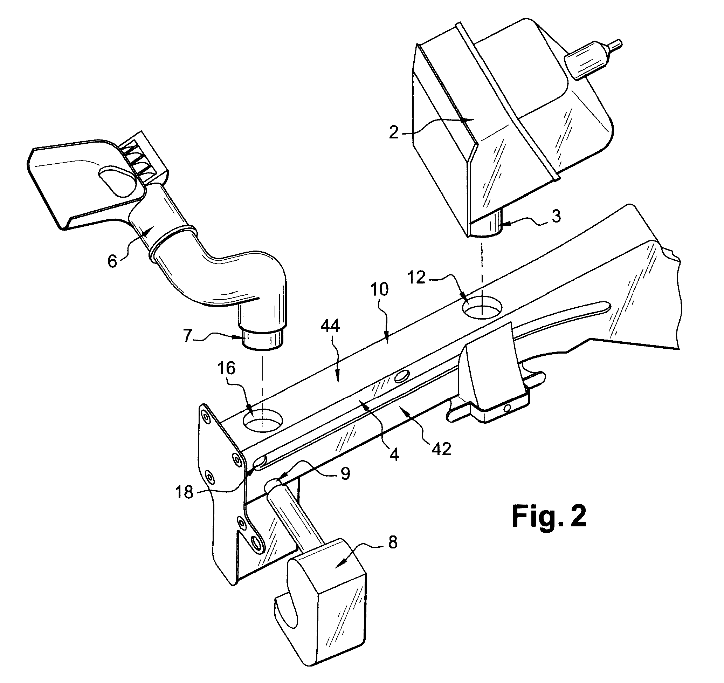

Selon un premier mode de réalisation représenté sur les figures 1 et 2, l'écope 6 est connectée au conduit d'admission 10, intégré dans le longeron 4, par des moyens d'accouplements disposés sur la paroi supérieure 44 du longeron 4. Le résonateur 8 est de son côté connecté par des moyens d'accouplements disposés sur l'une des parois latérales 42 du longeron 4 4. Selon une variante non représentée, les moyens d'accouplements propres à l'écope 6 et au conduit d'admission 10 peuvent être disposés sur l'une des parois latérales 42 du longeron 4.

Le longeron 4 étanche est muni de moyens de raccordement pour les branchements avec le filtre à air 2, l'écope 6 et le résonateur 8. Tel que vu précédemment, ces éléments peuvent être montés par emmanchement sur le longeron 4. A cet effet, l'extrémité 7 de l'écope 6 présente une forme apte à coopérer avec un orifice d'accueil 16 de l'écope, l'extrémité 3 du filtre à air 2 présente une forme apte à coopérer avec un orifice d'accueil 12 du filtre à air 2 et l'extrémité 9 du résonateur 8 présente une forme apte à coopérer avec un orifice d'accueil 18 du résonateur 8. Il sera compris que tout montage étanche peut être envisagé sans sortir du contexte de l'invention.

Afin de conserver l'étanchéité parfaite du conduit d'admission 10 et en l'occurrence du longeron 4, il convient d'éliminer les vis traversant ce conduit 10. Dans ce but, les points de fixation sur le longeron 4 de différents organes fonctionnels du véhicule, non représentés et à titre d'exemple les supports du groupe motopropulseur, sont redéfinis pour que ces points de fixations soient aménagés dans une zone distincte de la zone étanche 14 du conduit intégré dans le longeron 4. Il est possible que la taille et/ou la forme du longeron 4 soit modifiée, car on peut concevoir que le conduit d'admission amont 10 ne s'étende pas sur toute la hauteur du longeron 4, et qu'ainsi, des moyens fonctionnels du bloc avant puissent être solidarisés sur une partie du longeron 4 dans laquelle s'étend le conduit étanche 10. Ce conduit 10 serait alors cloisonné dans une partie supérieure du longeron 4 et le longeron 4 pourrait être amené à avoir une hauteur plus grande, pour que d'une part il puisse réponde aux contraintes structurelles, lors de chocs par exemple, et que d'autre part, le conduit d'admission 10 soit étanche et intégré dans le longeron 4.

Il sera compris que le conduit d'admission intégré de la présente invention, décrit ci dessus par rapport à un longeron 4 avant, peut être sans sortir du contexte de l'invention intégré à un longeron 4 formant la structure arrière du véhicule, dans le cas où le filtre à air 2 et le bloc moteur correspondant sont logés dans le compartiment arrière du véhicule.

L'invention n'est nullement limitée au mode de réalisation décrit et illustré qui n'a été donné qu'à titre d'exemple.

## Revendications

1. Dispositif d'admission d'air (1) pour un filtre à air (2) de véhicule automobile, comprenant au moins un conduit amont d'admission (10) situé entre un filtre à air (2) et une écope (6) par laquelle l'air arrive, ce conduit (10) s'étendant dans la direction d'un longeron (4) de la structure du véhicule, **caractérisé en ce qu'**un conduit étanche est formé à l'intérieur du longeron (4), une première extrémité (12) de ce conduit étanche communiquant avec le filtre à air (2) et l'autre extrémité (16) de ce conduit étanche communiquant avec l'écope (6), de sorte que le conduit amont d'admission d'air (10) est intégré à l'intérieur du longeron (4).

2. Dispositif selon la revendication 1, **caractérisé en ce que** chaque extrémité (12, 16, 18) du conduit (10) est munie de moyens d'accouplement intégrés dans le longeron (4).

3. Dispositif selon l'une des revendications 1 ou 2, **caractérisé en ce que** le filtre à air (2) est emmanché dans le longeron (4).

4. Dispositif selon l'une des revendications précédentes, **caractérisé en ce que** l'écope (6) est connecté au conduit d'admission (10) sur une des parois latérales (42) du longeron (4).

5. Dispositif selon l'une des revendications 1 à 3, **caractérisé en ce que** l'écope (6) est connecté au conduit d'admission (10) sur la paroi supérieure (44) de ce longeron (4).

6. Dispositif selon l'une des revendications 4 ou 5, **caractérisé en ce que** l'écope (6) est emmanchée dans le longeron (4).

7. Dispositif selon l'une des revendications précédentes, **caractérisé en ce qu'**un résonateur (8) est emmanché dans le longeron (4) et débouche sur le conduit étanche d'admission d'air (10).

8. Dispositif selon la revendication précédente, **caractérisé en ce que** le résonateur (8) est emmanché sur une des parois latérales (42) du longeron (4).

9. Structure de véhicule automobile comprenant un dispositif d'admission d'air (1) selon l'une des revendications précédentes, dans lequel les organes fonctionnels du véhicule sont liés au longeron (4) dans des parties distinctes du conduit étanche d'admission d'air (10).
